(19) Europäisches Patentamt / European Patent Office / Office européen des brevets

(11) **EP 4 162 795 A1**

(12) **EUROPÄISCHE PATENTANMELDUNG**

(43) Veröffentlichungstag:
**12.04.2023 Patentblatt 2023/15**

(21) Anmeldenummer: **22020483.8**

(22) Anmeldetag: **05.10.2022**

(51) Internationale Patentklassifikation (IPC):
**A01K 15/02** *(2006.01)* **A01K 13/00** *(2006.01)*

(52) Gemeinsame Patentklassifikation (CPC):
**A01K 13/004**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **05.10.2021 EP 21000281**

(71) Anmelder: **Baß Antriebstechnik GmbH**
**91607 Gebsattel (DE)**

(72) Erfinder: **BAß, Peter**
**DE-91607 Gebsattel (DE)**

(74) Vertreter: **Küchler, Stefan**
**Stefan T. Küchler**
**Patentanwalt**
**Färberstraße 20**
**90402 Nürnberg (DE)**

(54) **VORRICHTUNG ZUM BÜRSTEN VON TIEREN**

(57) Die Erfindung richtet sich auf eine Vorrichtung (1;1') zum Bürsten von Tieren mit wenigstens einer um eine Achse drehbar gelagerten Bürste (11,12;11'), die von einem Motor (6;6') in Form eines Wechsel- oder Drehstrommotors antreibbar ist, der mit einer Motorsteuereinrichtung (16;16') gekoppelt ist, wobei im Stillstand des Motors (6;6') permanent dessen Drehung überwacht wird, um eine nicht durch eine Ansteuerung des Motors (6;6') ausgelöste Drehung desselben zu erkennen und diese dann als Kriterium für das Einschalten des Motors (6;6') zu verwenden, und wobei für die Stillstandsüberwachung kein von der Motorsteuereinrichtung (16;16') getrennter Sensor vorgesehen ist, sondern dass die Stillstandsüberwachung auf eine Auswerteelektronik im Rahmen der Motorsteuereinrichtung (16;16') beschränkt ist oder als softwaremäßige Funktion innerhalb der Motorsteuereinrichtung (16;16') implementiert ist.

Fig.1

EP 4 162 795 A1

**Beschreibung**

Die Erfindung richtet sich auf eine Vorrichtung zum Bürsten von Tieren mit wenigstens einer um eine Achse drehbar gelagerten Bürste, die von einem Motor in Form eines Wechsel- oder Drehstrommotors antreibbar ist, der mit einer Motorsteuereinrichtung gekoppelt ist, wobei im Stillstand des Motors permanent dessen Drehung überwacht wird, um eine nicht durch eine Ansteuerung des Motors ausgelöste Drehung desselben zu erkennen und diese dann als Kriterium für das Einschalten des Motors zu verwenden.

Gattungsgemäße Bürsten werden bspw. in Ställen oder auf Weiden eingesetzt und sollen es dort gehaltenen Kühen, Schweinen oder sonstigen Zuchttieren ermöglichen, sich im Fall eines Juckreizes bürsten zu lassen. Aus Gründen der gebotenen Stromersparnis ist es andererseits nicht möglich, derartige Bürsten permanent laufen zu lassen. Sie sollen sich vielmehr nur bei Bedarf aktivieren lassen und laufen sodann für ein vorgegebenes Zeitintervall. Während sich das Ausschalten daher leicht mittels eines elektrischen oder elektronischen Zeitgeberbausteins leicht realisieren lässt, der sodann den betreffenden Motorschütz auslöst, muss für ein bedarfsgerechtes Einschalten dem Tier bei Bedarf die Möglichkeit geboten werden, sich der Bürstensteuerung bemerkbar zu machen. Bisher wird hierfür zumeist eine horizontal gelagerte Bürste anhebbar gelagert, und eine solche Hubbewegung wird sensiert. Gleichzeitig ist die Bürste im Allgemeinen etwas zu niedrig montiert, so dass ein an einer Bürstung interessiertes Tier sich unter die Bürste stellen und diese dadurch anheben muss, wodurch dann der Bürstvorgang ausgelöst wird. Eine solche anhebbare Montage ist aber mechanisch , mit einem nicht unbeträchtlichen Aufwand verbunden; außerdem ist Sorge dafür zu tragen, dass die Bürstvorrichtung nicht zu schwer für das Tier ist - in den meisten Fällen ist daher ein zusätzlicher Gewichtsausgleich erforderlich, beispielsweise in Form eines Gegengewichts od. dgl. Im Übrigen haben auch Tiere mitunter voneinander abweichende Größen, und dann kann es für ein etwas kleineres Tier schwierig werden, die Bürste so weit anzuheben, bis ein Sensor anspricht und die Bürste einschaltet.

In dem Wunsch, eine gattungsgemäße Vorrichtung zum Bürsten von Tieren derart weiterzubilden, dass der Wunsch eines Tieres nach einer Bürstbehandlung möglichst unverzüglich und eindeutig sensiert wird, ohne jedoch hierfür einen beträchtlichen konstruktiven Aufwand leisten zu müssen, und ohne dem Tier eine übermäßige Last aufzubürden, wurde bereits in der WO 2013/176596 A1 vorgeschlagen, im Stillstand des Motors permanent dessen Drehung zu überwachen, um eine nicht durch eine Ansteuerung des Motors ausgelöste Drehung desselben zu erkennen und diese dann als Kriterium für das Einschalten des Motors zu verwenden. Allerdings schlägt die WO 2013/176596 A1 zu diesem Zweck einen Rotationssensor vor, der an dem Motor bzw. zwischen dem Motor und der Bürste angeordnet ist und bspw. als Halleffektsensor oder als photoelektrischer Pulsgenerator ausgebildet ist. Hierbei ist nicht nur eine Modifikation des Motors erforderlich, sondern zusätzliche werden auch Kabel zwischen dem Rotationssensor im Bereich des Motors und einer Auswerteschaltung benötigt. All diese Modifikationen sind im rauen Betrieb in einem Stall oder auf einer Weide eher als störanfällig zu beurteilen.

Bei der Sensierung einer passiven Drehung einer Bürste bzw. eines mit jener gekoppelten Motors geht man dabei aus von der Erkenntnis, dass ein Tier in dem Wunsch, gebürstet zu werden, an die Bürste herantreten wird und infolge der dabei eintretenden Berührung u.a. auch ein Drehmoment auf die Bürste ausüben wird, die dann zu einer Drehung des Motors führt und sodann erkannt werden kann. Eine Steuerung kann dann so programmiert sein, dass bei Erkennung einer solchen, nicht von der Motorsteuerung hervorgerufenen Drehbewegung des Motors in der Vermutung, dass diese von einem Tier aufgrund des aktuellen Wunsches, gebürstet zu werden, ausgelöst wurde, der Motor eingeschalten wird, um die Bürste zu drehen, beispielsweise bis zum Ablauf einer vorgegebenen Zeitspanne.

Aus den oben erwähnten Nachteilen des beschriebenen Standes der Technik resultiert das die Erfindung initiierende Problem, wie man bei einem Wechsel- oder Drehstrommotor eine passive Drehung der Bürste erkennen kann, ohne dass es dazu einer Kabelverbindung von der Stillstandserkennungs-Baugruppe zu einem in oder an dem Motor angeordneten oder im Bereich eines Getriebes oder einer sonstigen Drehverbindung zwischen dem Motor und dem Getriebe angebauten Sensor bedarf.

Zur Lösung dieses Problems sieht die Erfindung vor, für die Stillstandsüberwachung keinen von der Motorsteuereinrichtung getrennten Sensor zu verwenden, sondern die Stillstandsüberwachung auf eine Auswerteelektronik im Rahmen der Motorsteuereinrichtung zu beschränken oder als softwaremäßige Funktion innerhalb der Motorsteuereinrichtung zu implementieren.

Mit anderen Worten, die Information über eine passive Drehung der Bürste stammt nicht von einem externen Sensor, sondern wird von den in der Motorsteuerungseinrichtung zur Verfügung stehenden Informationen abgeleitet. Insbesondere liegen der Motorsteuerung Informationen über die Klemmenspannung und/oder den Klemmenstrom des Motors vor, also über den Strom in einer mehreren oder allen Statorwicklung(en) des Motors. Hierbei kann es sich einerseits um Detailinformationen über den einzelnen Strom oder die Spannung an einer Motorklemme handeln, oder aber um eine Summeninformation über die Summe der Motorströme in der Statorwicklung, oder über die Parameter des komplexwertigen Motorstromvektors, also Amplitude und/oder Phase, oder aber um eine Summeninformation über die Summe der Motorspannungen an zwei oder drei Statorwicklungen, oder über die Parameter des komplexwertigen Motorspannungsvektors, wie dessen Amplitude und/oder Phase. Sofern der Motor nicht aktiv angesteuert wird, so wäre jede dieser Informationen, insbesondere eine von null verschiedene Amplitude, ein Indiz für eine passive Drehung des Rotors im Motor.

Daraus folgt, dass die Stillstandsüberwachung anhand wenigstens eines Klemmenstroms und/oder anhand wenigstens eeiner Klemmenspannung erfolgen kann, wobei ein dort induzierter und erkannter Strom und/oder eine dort induzierte und erkannte Spannung als Indiz für eine passive Drehung des Rotors im Motor zu werten ist und daher als Kriterium für das Einschalten des Elektromotors verwendet werden kann; denn eine passive Drehung des Rotors ohne eine aktive Ansteuerung desselben - sowie ggf. nach Abwarten eines gewissen Zeitintervalls, um eine Austrudelphase nach dem Abschalten des Motors zu überspringen und also den Umstand des Austrudelns ausschließen zu können - kann nur durch ein Tier hervorgerufen werden, welches in dem Wunsch sich bürsten zu lassen, an die Bürste herangetreten ist und sich dort an der Bürste reibt.

Diese Maßnahme bietet sich nicht nur an bei Verwendung von Motoren mit einer permanenten Erregung, bspw. in Form von einem oder mehreren, an dem Rotor applizierten Permanentmagneten, welche bei einer Drehung des Rotors in den einzelnen, ständerseitigen Wicklungen Spannungen induzieren, die sodann gemessen werden können. Darüber hinaus lässt sich dieses Prinzip auch realisieren bei einem Motor mit einer Erregerwicklung, sofern jene ständig mit Strom bzw. Spannung versorgt wird.

Versuche haben ergeben, dass sogar ein Asynchronmotor für dieses Prinzip geeignet ist, insbesondere auch ein Drehstrom-Asynchronmotor mit Käfigläufer. Denn bei diesem Motortyp ist der Rotor üblicherweise aus Eisen, insbesondere aus aneinander gelegten Eisenblechen, hergestellt, welche magnetisierbar sind. Diese Magnetisierung richtet sich stets nach den in die Statorwicklungen des Motors eingeprägten Ströme, da die stromdurchflossenen Statorwicklungen ein rotierendes Magnetfeld erzeugen. Nach Abschalten dieser Ströme klingt das solchermaßen von außen herovrgerufene Magnetfeld in dem Motor ab; nicht jedoch die Magnetisierung des Rotors, die als Remanenz- oder Restmagnetisierung bis zum nächsten aktiven Einschaltvorgang erhalten bleibt. Bei einer passiven Drehung der Bürste dreht sich - über das nicht selbsthemmend ausgebildete Getriebe - der Rotor des Motors passiv mit, wobei dessen Remanenzmagnetisierung noch eine gewisse Polarisierung aufweist - ähnlich wie bei einem Motor mit Permanentmagneten, nur eben schwächer - und daher in der Lage ist, bei einer passiven Drehung des Rotors aufgrund der Relativbewegung gegenüber den Statorspulen eine Spannung oder einen Strom in jenen Statorspulen zu induzieren. Der Vorteil eines Drehstrom-Asynchronmotors, insbesondere mit einem Käfigläuver, ist einerseits seine Robustheit. Der Rotor bzw. Läufer weist keine besonderen elektrischen, elektronischen oder mechanischen Bauelemente auf; bei einem Käfigläufer ist die Rotorwicklung als eine Art Käfig aus Kupferstäben ausgebildet, welche zu der Rotationsachse des Läufers parallel oder jeweils geringfügig geneigt sind und an jeder Stirnseite des Läufers von je einem vorzugsweise kupfernen Kurzschlussring kurzgeschlossen sind; Bevorzugt sind die Kupferstäbe des Käfigs, an welchen das Motordrehmoment einwirkt, in mantelseitigen Schlitzen des vorzugsweise aus einer größeren Anzahl von aneinandergeschichteten Eisenblechen gebildeten, zylindrischen Läufers eingeschoben. Üblicherweise wird ein solcher Rotor mittels je einem Kugellager oder mittels eines sonstigen Wälzlagers in jedem der beiden Lagerschilde des Motorgehäuses gelagert. Wenigstens eine Achse des Motors ist als Antriebswelle aus dem Gehäuse herausgeführt und verfügt über eine Längsnut, worin ein Keil zur drehfesten Verankerung eines Zahnrades oder einer Riemenscheibe einlegbar ist. Zwischen den beiden Lagerschilden gibt es ein zylindrisches Gehäuseteil, welches an seiner Innenseite bevorzugt in Längsrichtung oder leicht schräg verlaufende Nuten zum Einlegen der Statorwicklungen aufweist und an seiner Außenseite bevorzugt nach außen ragende Kühllamellen. Bei diesem Motortyp gibt es also weder eine Läuferwicklung noch Kommutatoren oder Schleifringe für die Einspeisung eines Stroms in den Läufer. Der zweite Vorteil eines Drehstrom-Asynchronmotors mit Käfigläufer ist seine leichte Steuerbarkeit. Sofern - wie in dem hier vorliegenden Fall - weder eine Lageregelung noch eine präzise Drehzahlregelung erforderlich ist, bedarf es keines Inkrementalgebers oder sonstigen Drehzahlsensors; Die Drehzahl-/Drehmoment-Kennlinie des Drehstrom-Asynchronmotors zeigt einen stabilen Arbeitspunkt bei der synchronen Drehzahl, also bei derjenigen Drehzahl, welche der Frequenz des eingespeisten Statorstroms entspricht, ggf. geteilt durch die Polteilung p, also die Anzahl gegeneinander versetzter Statorwicklungen einer Phase. Bei einer Polteilung p = 1 gibt es nur drei Statorwicklungen, die jeweils um Raumwinkel von 120° gegeneinander versetzt sind. Werden diese drei Phasen mit zeitlich um 120° gegeneinander versetzten Sinusspannungen mit einer Frequenz von 50 Hz angesteuert, ist die synchrone Drehzahl 3.000 U/min, wobei die Drehrichtung durch die zeitliche und räumliche Phasenfolge definiert ist - werden also zwei Motorphasen vetauscht, läuft der Motor rückwärts. Wirkt auf die Abtriebswelle eine bremsende Last, so verringert sich diese Drehzahl etwas, während das vom Motor aufgebrachte Drehmoment etwa linear ansteigt; es kommt zum sog. Schlupf. Bei einer antreibenden Last an der Abtriebswelle steigt die Drehzahl gegenüber der synchronen Drehzahl geringfügig an, während der Motor ein mit dem Schlupf etwa linear ansteigendes Bremsmoment erzeugt. Man kann daher bei einem Drehstrom-Asynchronmotor davon ausgehen, dass die Drehzahl des Motors immer innerhalb eines engen Drehzahlbandes um die jeweilige synchrone Drehzahl bleibt, solange das an der Abtriebswelle wirksame Lastmoment nicht größer wird als das Kippmoment des Motors; in letzterem Falle kann der Motor abgewürgt oder unkontrolliert beschleunigt werden. Da das Kippmoment jedoch ohnehin dem von dem Motor erzeugbaren Nennmoment entspricht, würde in jenem Fall jedoch selbst eine Regelung eine krasse Abweichung von Drehzahlist- und -sollwert nicht verhindern können.

Daher besteht in dem letzteren Fall eines Drehstrom-Asynchronmotors - jedenfalls für eine Stillstanderkennung - keine Veranlassung, anstelle oder kumulativ zu der Überwachung eines derartigen Motors hinsichtlich des Auftretens einer Klemmenspannung oder eines Klemmenstroms in dem Luftspalt zwischen Stator und Rotor einen Halleffektsensor oder einen sonstigen, für Magnetfelder sensiblen Sensor vorzusehen, und ggf. auf diese Weise eine Änderung des Magnetfeldes oder der Magnetfeldverteilung in der Maschine bzw. in dem Motor, insbesondere in dem Luftspalt, zu sensieren.

Ebenfalls ist es nicht erforderlich, für die Stillstandsüberwachung mit dem Motor oder der Bürste oder einem dazwischen angeordneten Getriebe einen Inkrementalgeber zu integrieren. Dieses Prinzip ist völlig unabhängig von der Art des verwendeten Motors, kann aber auch bei einem Elektromotor realisiert werden.

Das erfindungsgemäße Kriterium besteht also darin, wenigstens einen Strom i und/oder wenigstens eine Spannung u an den Motorklemmen wenigstens einer Phase zu messen und mit einem Nullwert zu vergleichen, also:

$$i \neq 0,$$

oder:

$$u \neq 0.$$

In der Praxis kann dies durch Vergleich mit einem kleinen, aber endlichen Grenzwert $\varepsilon_i > 0$ oder $\varepsilon_u > 0$ erfolgen:

$$|i| \geq \varepsilon_i,$$

oder:

$$|u| \geq \varepsilon_u.$$

Während die übliche Klemmenspannung an einer Phase eines Drehstrommotors gegenüber dem Mittelpunktsleiter im Normalbetrieb üblicherweise in der Größenordnung von 230 V liegt, würde als Spannungs-Grenzwert $\varepsilon_u$ bspw. ein Wert von 10 V oder weniger genügen, vorzugsweise $\varepsilon_u < 5$ V, oder $\varepsilon_u \leq 2$ V, insbesondere $\varepsilon_u \leq 1$ V.

Während der übliche Klemmenstrom in einer Phase eines Drehstrommotors im Normalbetrieb üblicherweise in der Größenordnung von 1 A oder darüber liegt, würde als Spannungs-Grenzwert $\varepsilon_i$ bspw. ein Wert von 10 mA oder weniger genügen, vorzugsweise $\varepsilon_i \leq 5$ mA, oder $\varepsilon_i \leq 2$ mA, insbesondere $\varepsilon_i \leq 1$ mA.

Die Erfindung empfiehlt weiterhin, dass kein Rotationssensor vorgesehen ist, insbesondere kein externer - also kein von dem Elektromotor und von der Motorsteuereinrichtung getrennter - Sensor. Damit lässt sich der für eine erfindungsgemäße Stillstandsüberwachung notwendige Zusatzaufwand minimieren oder auf eine Auswerteelektronik beschränken oder sogar auf eine softwaremäßig implementierte Funktion innerhalb einer Motorsteuereinrichtung.

Ein vorteilhafter Gesichtspunkt der Erfindung ist, dass die Motorsteuereinrichtung bevorzugt einen zwei- oder vorzugsweise dreiphasigen Wechselrichter umfasst. Ein Wechselrichter stellt zwar einen erheblichen Zusatzaufwand dar; allerdings ist damit auch eine unmittelbare Einflussnahme auf den Motor möglich, insbesondere auch während des laufenden Motors. Denn im Gegensatz zu einem Schütz, womit einfach nur eine Netzspannung an einen Motor geschalten wird, kann mit einem Wechselrichter der Effektivwert der Spannung genauso beeinflusst werden wie der Strom oder auch die Frequenz der Wechsel- oder Drehstromschwingung. Diese Parameter können jederzeit verändert werden, bspw. gemäß einer U/f-Kennlinie, wobei der Effektivwert der Spannung in einer bestimmten Relation zu der Frequenz variiert wird, bspw. linear. Andererseits wäre sogar eine Regelung des Motorstroms und damit der Drehzahl möglich. Mit einem Wechselrichter ist es auch ganz einfach möglich, die Drehrichtung des Motors umzukehren, indem die Phasenfolge zweier Motorphasen auf elektronischem Wege vertauscht wird.

Es liegt im Rahmen der Erfindung, dass die Motorsteuereinrichtung als Umrichter ausgebildet ist, bestehend aus einem Gleichrichter, einem Zwischenkreis und einem Wechselrichter. Damit ist die Stromversorgung für den Motor völlig unabhängig von der Art des speisenden Netzes; insbesondere kann die Frequenz am Ausgang des Wechselrichters vollkommen anders eingestellt werden als die Frequenz einer eingangsseitigen Speisefrequenz.

Die Erfindung lässt sich dahingehend weiterbilden, dass der Gleichrichter der Motorsteuereinrichtung als Brückengleichrichter zum Anschluss an eine zweiphasige Eingangs-Wechselspannung ausgebildet ist. Während ein Drehstrommotor als Spannungsversorgung eine dreiphasige Drehstromspannung benötigt, ist in einem Stall oder auf einer Weide oftmals nur Wechselstrom als Stromversorgung vorhanden. Aber selbst wenn eine Drehstrom-Versorgungsspannung vorhanden ist, kann daraus eine Phase mit Wechselspannung ausgewählt und eingespeist werden.

Die Stillstandsüberwachung kann wenigstens einen Spannungsteiler aufweisen und/oder wenigstens einen Strom-Spannungs-Wandler, welcher derart an den Um- oder Wechselrichter angeschlossen ist, dass anhand wenigstens einer Klemmenspannung und/oder anhand wenigstens eines Klemmenstroms ein messbares Signal erzeugt wird, d.h., vorzugseise ein Spannungssignal mit einem von einer Elektronik auswertbaren Spannungsbereich, also bspw. mit einem Spannungsbereich von 0 ... 5 V, oder von -5 V... +5 V, während die maximale Spannungsamplitude einer Phase bspw. von -230 V ... +230 V reicht oder gar von -400 V ... +400 V, bzw. ein Motorstrom je nach Nennleistung des Motors durchaus Werte von -10 A ... +10 A annehmen kann.

Weiterhin empfiehlt die Erfindung, dass die Stillstandsüberwachung wenigstens eine zwei- oder dreiphasige Gleichrichterschaltung aufweist, insbesondere einen Brückengleichrichter oder eine Drehstrombrücke, welche(r) derart an den Um- oder Wechselrichter angeschlossen ist, dass von wenigstens zwei Klemmenspannungen und/oder von wenigstens zwei Klemmenströmen ein messbares Signal erzeugt wird. Durch Gleichrichtung aller Phasenspannungen oder aller Phasenströme lassen sich mehrere Phasenspannungen oder Phasenströme derart zusammenfassen, dass nach dem Gleichrichter eine Art Summenspannung oder Summenstrom gebildet wird, in welche(n) die Spannung oder der strom jeder einzelnen Phase eingeht. Solchenfalls genügt es, am Ausgang eines solchen Gleichrichters nur eine einzige Spannung oder nur einen einzigen Strom zu überwachen, um zu erkennen, ob eine einzige Klemmenspannung oder ein einziger Klemmenstrom ungleich null ist. Somit lässt sich die Auswerteelektronik weiter vereinfachen.

Gerade bei einem Wechselrichter bietet sich die Möglichkeit, eine Gleichrichterschaltung zu verwenden, die durch mehrere Freilaufdioden gebildet wird, welche parallel zu den elektronischen Leistungsschaltern des Wechselrichters geschalten sind. Diese Freilaufdioden sind stets antiparallel zu dem jeweiligen Leistungtransistor oder sonstigen Leistungsschalter geschalten, d.h., sie sind in der Lage, eine in dem Motor induzierte Spannung oder einen in dem Motor induzierten Strom in den Zwischenkreis des Umrichters einzuspeisen, während die Leistungsschalter dazu dienen, die Spannung oder den Strom des Zwischenkreises in den Motor einzuprägen. Mit anderen Worten, wenn der eingangsseitige Gleichrichter des Umrichters abgeschalten und der Glättungskondensator des Spannungs-Zwischenkreises entladen ist, wird eine in dem Motor induzierte Spannung über die Freilaufdioden in den Zwischenkreis des Umrichters eingespeist und lädt dort den Glättungskondensator auf. Bei einem Strom-Zwischenkreis würde der induzierte Motorstrom die in abgeschaltetem Zustand zunächst stromlose Zwischenkreis-Spule erregen bzw. mit Strom versorgen.

Daher ist es möglich, dass der Spannungsteiler und/oder der Strom-Spannungs-Wandler an den Zwischenkreis des Umrichters angeschlossen oder in den Zwischenkreis des Umrichters eingefügt ist, um anhand der Zwischenkreisspannung oder des Zwischenkreisstroms eine messbare Spannung zu erzeugen, als Indiz dafür, dass der nicht angetriebene Motor passiv rotiert wird, voraussichtlich durch ein Tier, welches sich an der Bürste reibt in der Hoffnung auf eine Bürstenmassage. Allerdings ist es wichtig, dass in diesem Fall der Glättungskondensator am Zwischenkreis im passiven Stillstand des Motors entladen ist. Dies kann insbesondere dadurch erreicht werden, dass der mit der Speisespannung verbundene Gleichrichter zeitlich vor dem an dem Motor angeschlossenen Wechselrichter von der Speisespannung getrennt wird, so dass der Glättungskondensator nicht mehr nachgeladen wird und von dem nachlaufenden Elektromotor aktiv entleert wird.

Zur Auswertung sieht die Erfindung einen Komparator vor, um die bevorzugt gleichgerichtete, messbare Spannung mit einem vorgegebenen oder einstellbaren Schwellwert $\varepsilon_m$ zu vergleichen. Dieser Schwellwert $\varepsilon_m$ kann vergleichsweise klein gewählt werden, bspw. +0,1 V, wenn der gesamte Spannungsbereich der gleichgerichteten, messbare Spannung bspw. von 0 V ... +5 V reicht. Falls die messbare Spannung über einen Gleichrichter aus einer oder mehreren Phasenspannungen oder -strömen gewonnen ist, so bedarf es keiner zusätzlichen Gleichrichtung der messbaren Spannung mehr, sondern nur dann, wenn bspw. eine einzelne Phasenspannung ohne Gleichrichtung abgegriffen wird. Hierbei soll der Wert des Ausgangssignals im Fall einer Grenzwertüberschreitung als logische 1 bezeichnet werden.

Die Erfindung zeichnet sich bevorzugt weiter aus durch eine Baugruppe zur Erzeugung eines logischen Zustandssignals, dessen logischer Pegel den Zustand des aktiven Antriebs der Bürste von dem Zustand des passiven Stillstandes der Bürste unterscheidet. Sofern diesem Signal der Wert dieses Signals im Fall des passiven Stillstandes des Motors als logische 1 bezeichnet wird, so kann dieses Signal mit dem Ausgangssignal des Komparators mittels eines UND-Gatters verknüpft werden, um sodann als Ausgang ein Signal zu erhalten, das anzeigt, ob sich ein Tier bei still stehendem Motor an der Bürste reibt. Damit dieser Zustand insbesondere von dem Zustand einer induzierten Spannung oder eines induzierten Stroms infolge des passiven Austrudelns des Motors nach einer Abschaltung desselben unterscheidbar ist, muss eben dieser Zustand des passiven Austrudelns des Motors noch zu dem Zustand des aktiven Antriebs hinzugerechnet werden bzw. von dem Zustand des aktiven Stillstandes ausgenommen werden. Dies kann auf verschiedene Arten erfolgen. Einerseits könnte der Motor mittels einer als Frequenzumrichter ausgebildeten Motorsteuerung in seiner Frequenz entlang einer Rampe gezielt auf den Drehzahlsollwert 0 bzw. auf die Frequenz 0 herab gefahren werden, bspw. entlang einer linearen Rampe oder entlang einer sog. $sin^2$-Rampe, die ohne einen Knick in den jeweiligen Sollwert einläuft; dabei könnte die Auslaufzeit - also die Zeit von Nenndrehzahl bis zum Stillstand - einige Sekunden betragen, bspw. 5 bis 10 Sekunden. Andererseits - bspw. wenn der Umrichter in seiner Frequenz nicht steuerbar ist - wäre es auch möglich, den Umrichter einfach sofort abzuschalten bzw. seinen Ausgang hochohmig zu schalten, und sodann eine vorgegebene oder einstellbare Zeit abzuwarten, bspw. 10 bis 15 Sekunden, während der Motor genügend Zeit hat, allmählich auszutrudeln, und erst nachdem diese Wartezeit abgelaufen ist, wird das Stillstandssignal logisch umgeschalten auf den Pegel logisch 1.

Sofern - wie die Erfindung weiterhin vorsieht - auch für die Laufzeit des Motors ein Timer vorgesehen ist bzw. ein Zeitglied, so sollte dass dessen logisches Ausgangssignal einen elektronischen Leistungsschalter steuern, welcher zwischen dem Leistungseingang der Gleichrichterschaltung und dem Zwischenkreis angeordnet ist, wahlweise stromaufwärts der Gleichrichterschaltung oder stromabwärts derselben, um nach Ablauf der an dem Timer oder Zeitglied eingestellten Laufzeit der Bürste den Leistungseingang der Gleichrichterschaltung von dem Zwischenkreis zu trennen. Gleichzeitig sollte dieses Timer-Signal einen ggf. vorhandenen zweiten Timer bzw. ein zweites Zeitglied triggern für die Nachlaufzeit des Motors, und/oder den Sollwertgeber veranlassen, den Frequenz-Sollwert des Wechselrichters auf null zu fahren - entweder unmittelbar oder entlang einer Rampe.

Je nach der Art des verwendeten Motors sollte der Um- oder Wechselrichter derart ausgebildet sein, dass er an seinem Ausgang eine zwei- oder dreiphasige Spannung mit einer variablen Frequenz erzeugt. Dadurch wird eine aktive, kontinuierliche,, d.h. stufenlose Steuerung des Frequenz-Sollwertes ermöglicht.

Im Fall eines Um- oder Wechselrichters mit variabler Ausgangsfrequenz ist eine Weiterentwicklung der Erfindung möglich durch eine Baugruppe zur Erzeugung eines Frequenzsollwerts gemäß einer kontinuierlichen Hochlauf- und/oder Stillsetzungs-Rampe, so dass der Motor sanft anläuft und/oder sanft stillgesetzt wird. Wähend ersteres dazu dient, ein zu bürstendes Tier nicht zu erschrecken, kann letzteres dazu verwendet werden, den Motor gezielt auf den Drehzahlsollwert 0 herunter zu fahren, und erst nachdem dies erreicht ist, das Zustandssignal für den passiven Stillstand auf logisch 1 zu setzen.

Andererseits sieht die Erfindung eine Baugruppe zur Erzeugung eines logischen Drehrichtungssignals vor, dessen logischer Pegel die Drehrichtung des Motors definiert, wobei dieses logische Drehrichtungssignal zwischen zwei aufeinander folgenden Einschaltbefehlen des Motors umgeschalten wird, so dass der Motor immer abwechselnd in einer und in der anderen Drehrichtung anläuft. Eine solche, abwechselnde Drehrichtung der Bürste kann einerseits eine einseitige Abnutzung der Borsten der Bürste reduzieren, und andererseits handelt es sich dabei um eine Sicherheitsmaßnahme für den Fall, dass - aus welchem Grund auch immer - die Bürste sich irgendwo verhakt hat und blockiert ist. Wenn sie sodann beim nachfolgenden Anlauf in umgekehrter Richtung angetrieben wird, so kann sich eventuell diese Blockade lösen, mit dem Ziel, dass die Bürste ggf. wieder frei rotieren kann.

Die Erfindung lässt sich dahingehend weiterbilden, dass die Motorsteuereinrichtung in einem Gehäuse angeordnet ist, das an dem oder im Bereich des Motoranschlusskastens festgelegt ist. Solchenfalls kann eine werksseitig bereits mit dem Motor oder dem Motoranschlusskasten integrierte Motorsteuereinrichtung verwendet werden.

Ferner entspricht es der Lehre der Erfindung, dass die Motorsteuereinrichtung aufweist:

a) Eingangsanschlüsse zur Verbindung mit einem vorzugsweise zwei- oder dreiphasigen Stromnetz; sowie

b) Ausgangsanschlüsse zur Verbindung mit dem Motor; sowie ggf.

c) einen Steueranschluss, an welchem ein Schalter oder Not-Aus-Schalter anschließbar ist.

Damit ist die äußere Beschaltung der Motorsteuereinrichtung vergleichbar mit der eines Motoranschlusskastens und kann von jedem Elektriker oder gar Mechaniker installiert werden.

Es liegt im Rahmen der Erfindung, dass eine um eine vertikale Achse rotierende Bürste pendelnd gelagert ist. Eine derartige Bürste wird nur von der Schwerkraft in ihrer Ausgangslage stabilisiert und kann von einem Tier bei Bedarf seitlich ausgelenkt werden. Dadurch ist einerseits eine Beschädigung der Bürste ausgeschlossen; andererseits kann das Tier mit einer derartigen Bürste die verschiedensten Körperpartien bürsten lassen. Während eine solche Bürste primär zum Bürsten der Flanken eines Tieres geeignet ist, kann sie dennoch durch geeignete Auslenkung auch zum Bürsten des Rückens verwendet werden. Aus diesem Grunde ist es möglich, eine solche Bürste alleine zu verwenden, also ohne eine zusätzliche Rückenbürste.

Andererseits ist es auch möglich, dass eine um eine Achse rotierende Bürste nicht pendelnd gelagert ist, sondern um eine starr ausgerichtete Achse drehbar ist. Im Allgemeinen wird die Rotationsachse einer solchen Bürste eher horizontal ausgerichtet sein und nicht vertikal, so dass es sich hierbei eher um eine Rückebürste handelt.

Eine um eine Achse rotierende Bürste kann höhenverstellbar gelagert sein. Dies ist besonders bei um eine horizontale oder annähernd horizontale Achse rotierbare Rückenbürste wichtig, damit unterschiedlich große Tiere jeweils aufrecht stehend von einer derartigen Bürste ihren Rücken bürsten lassen können.

Die Erfindung bietet allerdings auch die Möglichkeit, dass eine um eine Achse rotierende Bürste nicht höhenverstellbar gelagert ist, sondern um eine starre Achse drehbar ist. Dies trifft insbesondere für leicht ansteigend geneigte Bürsten zu, weil sich dann Tiere unterschiedlicher Größen einfach unter verschiedenen Bereichen der Bürste aufhalten können, welche gerade die richtige Bürsthöhe haben. Zusätzlich oder alternativ zu einer Bürste mit leicht ansteigender Bürstenlängsachse können dazu auch rotierende Bürsten verwendet werden, deren Borstenlängen sich entlang der Rotationsachse verändern, bspw. in Form eines Kegels als Einhüllender einer solchen Bürste.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    eine erste Ausführungsform der Erfindung mit zwei an einen gemeinsamen Antrieb gekoppelten Bürsten; sowie

Fig. 2    eine zweite Ausführungsform der Erfindung mit einer einzigen Bürste, die von einem etwa horizontalen Auslegerarm getragen wird und von dessen freiem Ende etwa vertikal pendelnd herabhängt;

Fig. 3    einen Schnitt durch die Fig. 2 entlang einer vertikalen, durch die Längsachse der vertikal herabhängenden Bürste sowie durch die Längsachse eines jene tragenden, etwa horizontal auskragenden Auslegerarms aufgespannte Ebene; sowie

Fig. 4    ein Schaltbild mit den elektrischen Komponenten zur Steuerung des Antreibsmotors einer Bürsteinrichtung nach einem der Figuren 1 bis 3.

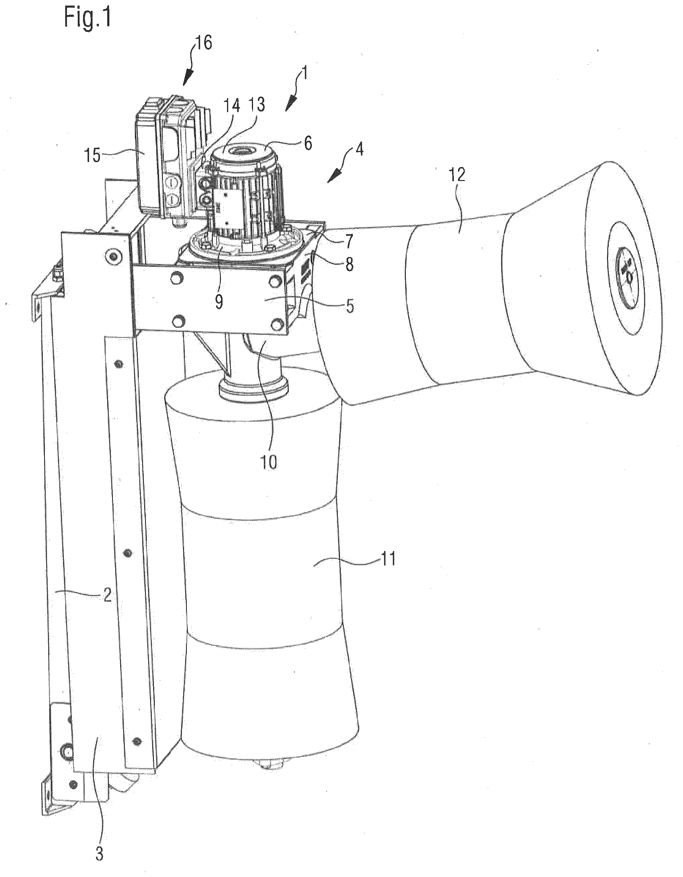

Die in Fig. 1 dargestellte Vorrichtung 1 zum Bürsten von Tieren kann z.B. in einem Stall oder auf einer Weide installiert werden. Man erkennt einen Montagerahmen 2, der an einer stabilen Tragkonstruktion montierbar ist, beispielsweise an einer Hauswand. An diesem Montagerahmen 2 kann ein beweglicher Rahmen 3 höhenverstellbar gelagert sein. Eine Höhenverstellung ist dann erforderlich, wenn Tiere unterschiedlicher Größe sich bürsten lassen wollen bzw. sollen; anderenfalls kann auf eine solche Höhenverstellung verzichtet werden.

An diesem beweglichen Rahmen 3 - oder, falls eine Höhenverstellung nicht gewünscht ist, unmittelbar an dem Montagerahmen 2 - ist in einer Höhe über dem Boden von etwa 1 bis 2 m eine Antriebseinheit 4 befestigt, insbesondere über von dem Rahmen 2, 3 seitlich auskragende Halteflansche 5.

Bevorzugt umfasst die Antriebseinheit 4 neben dem eigentlichen Motor 6 ein Getriebe 7, um die Motordrehzahl zu reduzieren. Das Getriebegehäuse 8 kann zwischen den Halteflanschen 5 eingefügt und daran festgeschraubt sein.

Bevorzugt sitzt der Antriebsmotor 6 oben auf dem Getriebegehäuse 8; zu diesem Zweck kann ein Motorschild 9 an der Oberseite des Getriebegehäuses 8 angeflanscht sein.

Der Ausgang des Getriebes 7 befindet sich an der Unterseite des Getriebegehäuses 8. Dort ist unmittelbar ein Verzweigungsgetriebe 10 angeschlossen. Die Längs- bzw. Drehachsen der beiden Ausgangsanschlüsse des Verzweigungsgetriebes 10 verlaufen unter einem Zwischenwinkel von 70° bis 130° zueinander, vorzugsweise derart, dass die Drehachse einer ersten, daran angeschlossenen Bürste 11 vertikal nach unten weist, während die Drehachse einer zweiten, an das Verzweigungsgetriebe 10 angeschlossenen Bürste 12 entweder etwa horizontal auskragt oder leicht nach oben weist.

Bei dem Motor 6 handelt es sich um einen Elektromotor in Form eines Wechsel- oder Drehstrom-Motors, beispielsweise um einen Drehstrom-Asynchronmotor, bevorzugt um einen Drehstrom-Asynchronmotor mit Käfigläufer, weil jener besonders robust ist und gleichzeitig besonders gut steuerbar. Am Gehäuse 13 des Motors 6 befindet sich ein Anschlusskasten 14, in welchem die Motoranschlussklemmen untergebracht sind.

An dem Deckel des Motor-Anschlusskastens 14 ist ein Gehäuse 15 befestigt, beispielsweise angeschraubt, in welchem eine Steuereinrichtung 16 für den Motor 6 untergebracht ist. Damit die Motor-Steuereinrichtung 16 jederzeit leicht zugänglich ist, kann das Gehäuse 15 aus einer Schale 23 bestehen, die an dem Motor-Anschlusskasten 14 festgelegt ist, und aus einem jene Schale 23 abschließenden, durch Lösen einiger Schrauben öffenbaren Deckel 24.

Die Motorsteuerinrichtung 16 ist derart ausgebildet, dass im Stillstand des Motors 6 permanent dessen Drehung überwacht wird, um eine nicht durch eine Ansteuerung des Motors 6 ausgelöste oder durch dessen Austrudeln bedingte Drehung desselben zu erkennen und diese dann als Kriterium für das Einschalten des Motors 6 zu verwenden.

Zur Ansteuerung des Motors 6 ist bevorzugt ein Umrichter 27 mit einem ausgangsseitigen Drehstrom-Wechselrichter 28 vorgesehen, der in dem Gehäuse 15 untergebracht ist und die Motorsteuerung 16 bildet.

An den Motorklemmen des Motors 6 oder an damit verbundenen Leitern der Motorsteuerung 16 oder des Umrichters 27 können ein oder mehrere Spannungssensoren angeordnet sein, welche eine oder mehrere Phasenspannung(en) und/oder eine oder mehrere der verketteten Spannungen des Motors sensieren und einer Steuerelektronik mitteilen, falls dort bei ausgeschaltetem Motor 6 dennoch eine Spannung induziert wird. Denn diese kann nur darauf zurückzuführen sein, dass eine oder beide Bürsten 11, 12 von einem Tier, z.B. einer Kuh, gedreht werden in dem Wunsch, sich dort bürsten zu lassen, da ein sich an einer Bürste 11, 12 reibendes Tier unweigerlich auch die Bürste(n) 11, 12 und somit indirekt auch den Motor 6 in Bewegung versetzt. Anstelle von Spannungssensoren für die Erfassung einer oder mehrerer Phasenspannung(en) und/oder einer oder mehrerer der verketteten Spannungen des Motors können auch ein oder mehrere Stromsensoren vorgesehen sein für zur Erfassung des Stroms oder der Ströme an wenigstens einer Motorklemme, oder von davon abgeleiteten Strömen innerhalb der Motorsteuerung 16 oder des Umrichters 27.

Dazu ist es vorteilhaft, wenn die Untersetzung des Getriebes 7 nicht so groß eingestellt ist, dass sich selbsthemmende Eigenschaften ergeben. Mit anderen Worten, die Drehzahl-Untersetzung des Getriebes 7 sollte nicht zu groß gewählt werden, damit die Drehmoment-Übersetzung nicht zu groß ist.

Sobald ein Sensor der Steuereinrichtung 16 bzw. des Umrichters 27 meldet, dass sich eine Bürste 11, 12 bewegt, ohne eingeschalten zu sein, so wird sodann der Motor 6 für ein vorgegebenes Zeitintervall aktiviert, um das betreffende Tier aktiv zu bürsten.

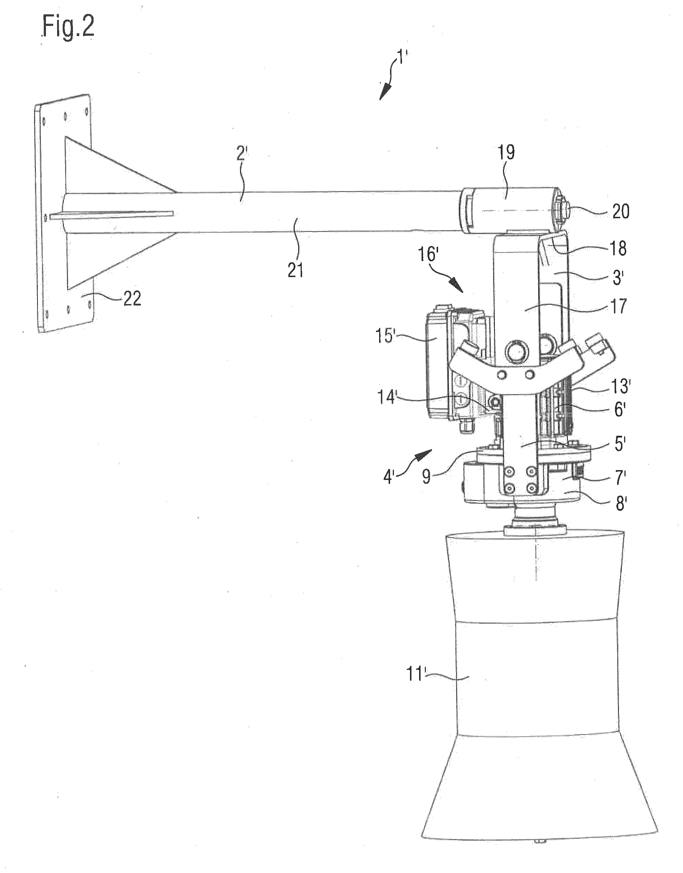

Die zweite, in Fig. 2 wiedergegebene Ausführungsform der Erfindung umfasst eine Vorrichtung 1' zum Bürsten von Tieren, die sich von der vorangehenden dadurch unterscheidet, dass hier nur eine einzige Bürste 11' vorgesehen ist.

Die Drehachse 25 dieser Bürste 11' ist etwa vertikal orientiert. Die Bürste 11' hängt an einem Getriebe 7', dessen Gehäuse 8' einen oberseitigen Anschluss für den Antriebsmotor 6' aufweist. Das Getriebegehäuse 8' ist zwischen zwei Halteflanschen 5' befestigt, insbesondere angeschraubt.

Die beiden Halteflansche 5' sind als Schenkel 17 eines U-förmigen Halterahmens 3' ausgebildet, an dessen Mittelsteg 18 eine Muffe 19 angeordnet ist, beispielsweise angeschweißt. Bevorzugt erstreckt sich die Längsachse der Muffe 19 lotrecht zu der von den beiden Schenkeln 17 des U-förmigen Halterahmens 3' aufgespannten Ebene. Diese Muffe 19 ist auf einer Achse 20 drehbeweglich aufgesteckt, so dass die Bürste 11' um die Achse 20 pendelnd gelagert ist.

Die Achse 20 ist über einen etwa horizontal auskragenden Bügel 21 mit einer Montageplatte 22 verbunden, zu deren Ebene der Bügel 21 etwa lotrecht verläuft. Achse 20, Bügel 21 und Montageplatte 22 bilden zusammen einen Montageausleger 2', der an einer stabilen Tragkonstruktion montierbar ist, beispielsweise an einer Hauswand.

Falls eine Pendelung der Bürste 11' nicht erforderlich ist, kann der Rahmen 3' mit dem Montageausleger 2' unbeweglich verbunden sein.

Auch bei dem Motor 6' handelt es sich um einen Elektromotor, beispielsweise um einen Drehstrom-Asynchronmotor, insbesondere um einen Drehstrom-Asynchronmotor mit Käfigläufer, der an seinem Gehäuse 13' einen Anschlusskasten 14' aufweist, worin die Motoranschlussklemmen untergebracht sind.

An dem Deckel des Motoranschlusskastens 14' ist ein Gehäuse 15' befestigt, beispielsweise angeschraubt, in welchem eine Steuereinrichtung 16' für den Motor 6' untergebracht ist. Bevorzugt ist die Motorsteuerung 16' als Umrichter 27 ausgebildet.

Die Motorsteuereinrichtung 16' bzw. der Umrichter 27 überwacht im Stillstand des Motors 6' permanent dessen Drehung, um eine nicht durch eine Ansteuerung des Motors 6' ausgelöste Drehung desselben zu erkennen und diese dann als Kriterium für das Einschalten des Motors 6' zu verwenden.

Zu diesem Zweck ist wenigstens ein Motorspannungssensor vorgesehen, der an den Motorklemmen des Motors 6' oder an damit verbundenen Leitern angeschlossen ist, um eine oder mehrere Phasenspannung(en) und/oder eine oder mehrere der verketteten Spannungen des Motors 6' zu sensieren. Die Motorsteuereinreichtung 16' kann anhand des Sensorsignals erkennen, ob dort bei ausgeschaltetem Motor 6' dennoch eine Spannung induziert wird. Denn diese kann nur darauf zurückzuführen sein, dass die Bürste 11' von einem Tier gedreht wird in dem Wunsch, sich dort bürsten zu lassen. Denn dabei wird von dem sich daran reibenden Tier unweigerlich auch die Bürste 11' und somit indirekt auch der Motor 6' in Bewegung versetzt. Anstelle von Spannungssensoren für die Erfassung einer oder mehrerer Phasenspannung(en) und/oder einer oder mehrerer der verketteten Spannungen des Motors können auch ein oder mehrere Stromsensoren vorgesehen sein für zur Erfassung des Stroms oder der Ströme an wenigstens einer Motorklemme, oder von davon abgeleiteten Strömen innerhalb der Motorsteuerung 16' oder des Umrichters 27.

Dabei ist es vorteilhaft, wenn die Untersetzung des Getriebes 7' nicht so groß eingestellt ist, dass sich selbsthemmende Eigenschaften ergeben. Mit anderen Worten, die Drehzahl-Untersetzung des Getriebes 7' sollte nicht zu groß gewählt sein, damit die Drehmoment-Übersetzung nicht zu groß ist.

Sobald ein Sensor der Steuereinrichtung 16' eine Induktionsspannung an den Motorklemmen meldet oder einen induzierten Strom in wenigstens einer Motorwicklung, ohne dass der Motor 6' eingeschalten ist, so aktiviert die Steuereinrichtung 16' den Motor 6' für ein vorgegebenes Zeitintervall, um das betreffende Tier aktiv zu bürsten.

In den beschriebenen Ausführungsformen könnte der Motor 6; 6' auch ein Drehstrom-Synchronmotor sein, insbesondere ein sog. "bürstenloser Gleichstrommotor", dessen Rotor 26 mit Permanentmagneten bestückt ist, so dass durch eine Drehung des Rotors in der oder den Statorspulen Spannungen erzeugt werden.

Die Auswerteelektronik innerhalb der Motorsteuerung 16' bzw. innerhalb des Umrichters 27 ist ständig eingeschalten, um eine Drehung des Motors anhand von dessen induzierter Statorspannung oder anhand von einem induzierten Statorstrom erkennen zu können.

Bevorzugt wird zu diesem Zweck zunächst ein Spannungssignal an wenigstens einer Statorwicklung ggf. mit einem Spannungsteiler herabgeteilt und gleichgerichtet, bevorzugt mit einem Brückengleichrichter, um auch negative Induktionsspannungen erkennen zu können. Bei einer mehrphasigen, insbesondere dreiphasigen Statorwicklung kann ein Dreiphasengleichrichter verwendet werden, insbesondere eine Drehstrombrücke. Diese kann je nach Ausführungsform unmittelbar an den Motorklemmen angeschlossen sein oder über zwischengeschaltete Spannungteiler.

Das gleichgerichtete Signal kann sodann von einem Komparator mit einem vorgegebenen oder einstellbaren Schwellwert verglichen werden, der einen logischen High-Pegel erzeugt, wenn dieser Schwellwert von dem gleichgerichteten Signal überschritten wird und also der Motor 6; 6' gedreht wird.

Um eine Drehung des nicht angetriebenen Motors 6; 6' von einer Drehung infolge von dessen Antrieb zu unterscheiden, sollte die Ansteuerschaltung selbst ein Signal generieren, welches beim aktiven Antrieb bspw. einen Low-Pegel aufweist und bei stillgesetztem Antrieb dann einen High-Pegel annimmt.

Dieses den stillgesetzten Antrieb indizierende Signal kann sodann mit dem Komparator-Ausgangssignal an einem UND-Gatter verknüpft werden, so dass am Ausgang des UND-Gatters nur dann ein Signal anliegt, wenn sich der Motor 6; 6' trotz fehlender Ansteuerung dreht.

Dieses Signal kann sodann auf ein Halteglied gelegt werden, welches mit einer steigenden Flanke auf einen High-Pegel an seinem Ausgang umschaltet, und kann verwendet werden, um den Motor 6; 6' aktiv einzuschalten.

Schließlich kann das Halteglied mit einem Zeitglied integriert oder gekoppelt sein, so dass das Motor-Einschaltsignal nach einer vorgegebenen oder vorgebbaren Zeit wieder auf Low zurückkehrt und die Bürste(n) 11, 12; 11' wieder stillgesetzt wird (werden).

Das Ausgangssignal dieses Zeitgliedes kann als Anlass verwendet werden, um den Motor 6; 6' nach einem vorgegebenen oder vorgebbaren Zeitintervall stillzusetzen, - oder zunächst den Eingangsgleichrichter 29 des Umrichters 27 von der Speisespannung zu trennen.

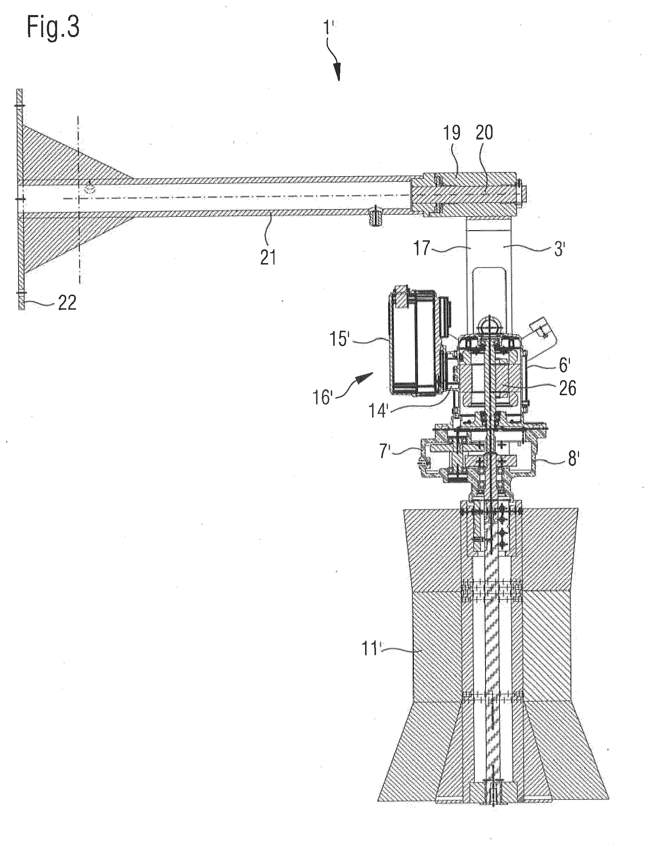

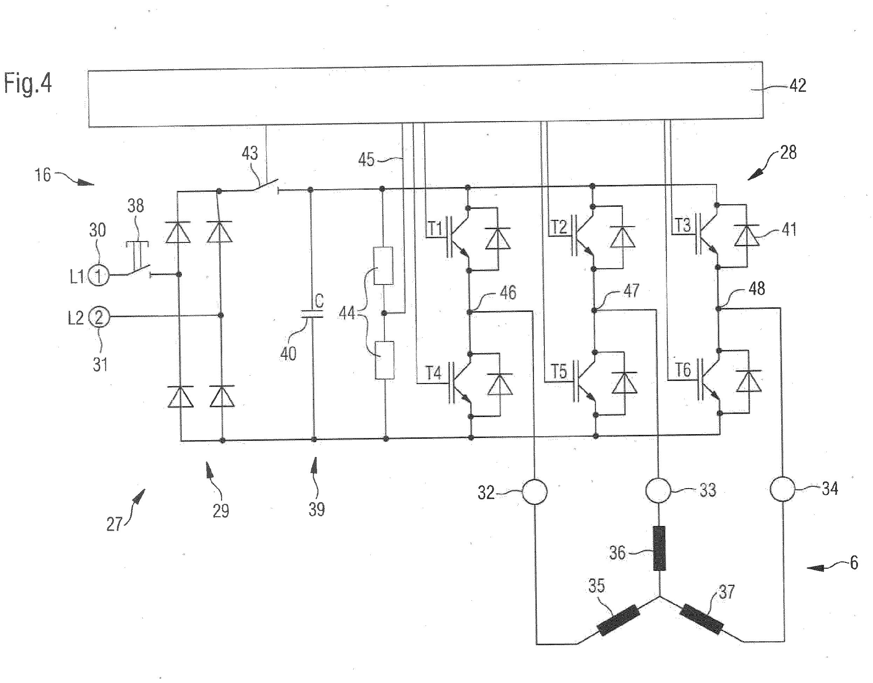

Gemäß dem elektrischen Schaltbild gemäß Fig. 4 befindet sich die Motorsteuereinrichtung 16 zwischen einer vorzugsweise zweiphasigen Speisespannung 30, 31 und den drei Statorklemmen 32, 33, 34 der Statorwicklungen 35, 36, 37 des Motors 6, welche im vorliegenden Fall im Stern geschalten sind, es wäre auch eine Dreieckschaltung denkbar. Es sollte erwähnt werden, dass die Motorsteuereeinrichtung 16 gemäß diesem Schaltbild auch für die Bürstvorrichtung 1' gemäß Fig. 2 und 3 verwendbar ist.

Die Steuereinrichtung 16 besteht aus einem Umrichter 28 mit Eingangs-Brückengleichrichter 29 zum Anschluss an die vorzugsweise zweiphasige Speisespannung 30, 31 - ggf. über einen manuellen EIN/AUS-Schalter 38, einem Gleichstrom- oder Gleichspannungs-Zwischenkreis 39 und einem vorzugsweise dreiphasigen Ausgangs-Wechselrichter 28 zum Anschluss an die Statorklemmen 32, 33, 34 des Motors 6.

Dem Wechselrichter 28 obliegt es, aus der von dem Brückengleichrichter 29 gleichgerichteten und von dem Glättungskondensator 40 geglättete

Zwischenkreisspannung durch eine gesteuerte Taktung der Leistungsschalter in Form von bspw. Leistungstransistoren T1 bis T6 an die Motorklemmen 32, 33, 34 des Motors 6 anzuschalten.

Damit die in den Statorwicklungen 35, 36, 37 fließenden Ströme beim Abschalten eines Leistungstransistors T1 bis T6 oder sonstigen Leistungsschalters nicht abrupt unterbrochen werden, was die Induktion von sehr hohen und dadurch gefährlichen Spannunsspitzen verursachen könnte, ist jedem Leistungstransistor T1 bis T6 oder sonstigen Leistungsschalter eine Freilaufdiode 41 parallelgeschalten, so dass der Strom weiterhin durch die Statorwicklungen 35, 36, 37 und von dort in den Zwischenkreis 39 fließen kann.

Die Steuerung der Transistoren T1 bis T6 oder sonstigen Leistungsschalter des Wechselrichters 28 erfolgt über eine Steuerelektronik 42 der Motorsteuerung 16.

Diese Steuerelektronik 42 kann ferner über einen weiteren Leistungsschalter 43 den Eingangs-Gleichrichter 29 von dem Zwischenkreis 39 abtrennen.

Über einen Spannungsteiler 44 wird die Spannung in dem Zwischenkreis 39 herabgeteilt auf eine messbare Spannung, die am Ausgangsanschluss 45 des Spannungsteilers 44 abgegriffen wird und der Steuerelektronik 42 zugeführt wird, wo sie weiter verarbeitet werden kann.

Im Stillstand des Motors 6 sind bei stromlosem Wechselrichter 28 die Statorwicklungen 35, 36, 37 in Normalfall strom- und spannungslos.

Bei geöffnetem Schalter 43 ist der Glättungskondensator 40 von dem Eingangs-Gleichrichter 29 getrennt und daher im Normalfall entladen.

Wird nun der Rotor des Motors 6 von einem Tier in dem Wunsch gebürstet zu werden, gedreht, so werden aufgrund der Remanenz-Magnetisierung in dem Eisen des Motorläufers in den Statorwicklungen 35, 36, 37 Spannungen und/oder Ströme induziert, vornehmlich Wechselspannungen und -ströme.

Diese gelangt über die Klemmen 32, 33, 34 an den Ausgang 46, 47, 48 je zweier im Gegentakt geschaltener Leistungstransistoren T1 und T4, bzw. T2 und T5, bzw. T3 und T6, welche jedoch im Sperrzustand sind.

Allerdings bilden die den Leistungstransistoren T1 bis T6 parallel geschaltenen Feilauf-Dioden 41 eine Art Drehstrom-Brückengleichrichter für die Wechselspannungen und -ströme an den Motorklemmen 32, 33, 34.

Diese gleichgerichteten Wechselspannungen oder -ströme laden den Glättungskondensator 40 im Zwischenkreis 39, der im Stillstand normalerweise spannungslos ist, auf, und daher kann die Steuerelektronik 42 über den Ausgangsanschluss 45 des Spannungsteilers 44 eine Zwischenkreisspannung erkennen, obwohl der Eingangs-Brpckenngleichrichter 29 von dem Zwischenkreis 39 durch den Schalter 43 abgetrennt ist.

Aus diesem Grund kann diese Spannung nur von einer in den Statorwicklungen 35, 36, 37 des Motor 6 induzierten Spannung oder induziertem Strom herrühren und ist also auf eine passive Drehung der Bürste(n) 11, 12 durch ein Tier zurückzuführen.

Die Motorsteuerung 16 aktiviert aufgrunddessen den Umrichter28, indem der Schalter 43 geschlossen wird und die Transistoren T1 bis T6 in einem bestimmten Takt eingeschaltet werden, bspw. in Form einer Pulsweitenmodulation, um in die Statorwicklungen 35, 36,37 des Motors 6 Sinusspannungen und/oder -ströme einzuprägen mit einer vorzugsweise steuerbaren Frequenz. Die Frequenz kann wahlweise schlagartig auf die Nennfrequenz hochgestellt werden oder entlang einer Rampe in einem endlichen Zeitraum bis auf die Nennfrequenz hochgefahren werden.

Dabei schaltet die Steuerelektronik 42 ein internes Datenbit um, welches die Drehrichtung des Motors bestimmt, so dass dieser bei jedem Einschalten mit der anderen Drehrichtung anläuft wie zuvor.

Beim Abschalten des Motors 6 wird entweder der Wechselrichter 28 entlang einer Rampe gesteuert heruntergefahren auf den Sollwert 0, oder sofort abgeschalten, so dass der Motor 6 austrudelt. In letzterem Falle muss vor Aktivierung der Stillstandsüberwachung ein einstellbares Zeitintervall von bspw. 10 Sekunden abgewartet werden, damit der Motor 6 sich bei Aktivierung der Stillstandsüberwachung nicht mehr dreht.

Bezugszeichenliste

| 1 | Vorrichtung | 26 | Rotor |
|---|---|---|---|
| 2 | Montagerahmen | 27 | Umrichter |
| 3 | beweglicher Rahmen | 28 | Wechselrichter |
| 4 | Antriebseinheit | 29 | Eingangsgleichrichter |
| 5 | Halteflansch | 30 | Klemme für Speisespannung |
| 6 | Motor | 31 | Klemme für Speisespannung |
| 7 | Getriebe | 32 | Motorklemme |
| 8 | Getriebegehäuse | 33 | Motorklemme |
| 9 | Motorschild | 34 | Motorklemme |
| 10 | Verzweigungsgetriebe | 35 | Statorwicklung |
| 11 | Bürste | 36 | Statorwicklung |
| 12 | Bürste | 37 | Statorwicklung |
| 13 | Gehäuse | 38 | Schalter |
| 14 | Anschlusskasten | 39 | Zwischenkreis |
| 15 | Gehäuse | 40 | Glättungskondensator |
| 16 | Steuereinrichtung | 41 | Freilauf-Diode |
| 17 | Schenkel | 42 | Steuerelektronik |
| 18 | Mittelsteg | 43 | Leistungsschalter |
| 19 | Muffe | 44 | Spannungsteiler |
| 20 | Achse | 45 | Abgriff |
| 21 | Bügel | 46 | Wechselrichter-Ausgang |
| 22 | Montageplatte | 47 | Wechselrichter-Ausgang |
| 23 | Schale | 48 | Wechselrichter-Ausgang |
| 24 | Deckel | | |
| 25 | Drehachse | | |

**Patentansprüche**

1. Vorrichtung (1;1') zum Bürsten von Tieren mit wenigstens einer um eine Achse drehbar gelagerten Bürste (11,12:11'), die von einem Motor (6;6') in Form eines Wechsel- oder Drehstrommotors antreibbar ist, der mit einer Motorsteuereinrichtung (16;16') gekoppelt ist, wobei im Stillstand des Motors (6;6') permanent dessen Drehung überwacht wird, um eine nicht durch eine Ansteuerung des Motors (6;6') ausgelöste Drehung desselben zu erkennen und diese dann als Kriterium für das Einschalten des Motors (6;6') zu verwenden, **dadurch gekennzeichnet, dass** für die Stillstandsüberwachung kein von der Motorsteuereinrichtung (16;16') getrennter Sensor vorgesehen ist, sondern dass die Stillstandsüberwachung auf eine Auswerteelektronik im Rahmen der Motorsteuereinrichtung (16;16') beschränkt ist oder als softwaremäßige Funktion innerhalb der Motorsteuereinrichtung (16;16') implementiert ist.

2. Vorrichtung (1;1') nach Anspruch 1, **dadurch gekennzeichnet, dass** der Motor (6;6') ein Drehstrom-Asynchronmotor ist vorzugsweise ein Drehstrom-Asynchronmotor mit Käfigläufer, und die Stillstandsüberwachung anhand seines Klemmenstroms oder seiner Klemmenspannung erfolgt, indem ein dort induzierter und erkannter Strom und/oder eine dort induzierte und erkannte Spannung als Kriterium für das Einschalten des Motors (6;6') verwendet wird.

3. Vorrichtung (1;1') nach Anspruch 2, **dadurch gekennzeichnet, dass** die Motorsteuereinrichtung (16;16') einen zwei- oder vorzugsweise dreiphasigen Wechselrichter umfasst.

4. Vorrichtung (1;1') nach Anspruch 3, **dadurch gekennzeichnet, dass** die Motorsteuereinrichtung (16;16') als Umrichter ausgebildet ist, bestehend aus einem Gleichrichter, einem Zwischenkreis und einem Wechselrichter.

5. Vorrichtung (1;1') nach Anspruch 4, **dadurch gekennzeichnet, dass** der Gleichrichter der Motorsteuereinrichtung (16;16') als Brückengleichrichter zum Anschluss an eine zweiphasige Eingangs-Wechselspannung ausgebildet ist.

6. Vorrichtung (1;1') nach einem der Ansprüche 3 bis 5, **dadurch gekennzeichnet, dass** die Stillstandsüberwachung wenigstens einen Spannungsteiler aufweist und/oder wenigstens einen Strom-Spannungs-Wandler, welcher derart an den Um- oder Wechselrichter angeschlossen ist, dass von wenigstens einer Klemmenspannung und/oder von wenigstens einem Klemmenstrom ein messbares Signal erzeugt wird.

7. Vorrichtung (1;1') nach Anspruch 6, **dadurch gekennzeichnet, dass** die Stillstandsüberwachung wenigstens eine zwei- oder dreiphasige Gleichrichterschaltung aufweist, insbesondere einen Brückengleichrichter oder eine Drehstrombrücke, welche(r) derart an den Um- oder Wechselrichter angeschlossen ist, dass von wenigstens zwei Klemmenspannungen und/oder von wenigstens zwei Klemmenströmen ein messbares Signal erzeugt wird.

8. Vorrichtung (1;1') nach Anspruch 7, **dadurch gekennzeichnet, dass** die Gleichrichterschaltung durch mehrere Freilaufdioden gebildet wird, welche parallel zu den elektronischen Leistungsschaltern des Wechselrichters geschalten sind.

9. Vorrichtung (1;1') nach Anspruch 8 in Verbindung mit Anspuch 6, **dadurch gekennzeichnet, dass** der Spannungsteiler und/oder der Strom-Spannungs-Wandler an den Zwischenkreis des Umrichters angeschlossen oder in den Zwischenkreis des Umrichters eingefügt ist, um anhand der Zwischenkreisspannung oder des Zwischenkreisstroms eine messbare Spannung zu erzeugen.

10. Vorrichtung (1;1') nach einem der Ansprüche 3 bis 9, **gekennzeichnet durch** einen Komparator, um die messbare Spannung mit einem vorgegebenen oder einstellbaren Schwellwert zu vergleichen.

11. Vorrichtung (1;1') nach einem der Ansprüche 3 bis 10, **gekennzeichnet durch** eine Baugruppe zur Erzeugung eines logischen Zustandssignals, dessen logischer Pegel den Zustand des aktiven Antriebs der Bürste von dem Zustand des passiven Stillstandes der Bürste unterscheidet.

12. Vorrichtung (1;1') nach Anspruch 11, **dadurch gekennzeichnet, dass** das logische Zustandssignal einen elektronischen Leistungsschalter steuert, welcher zwischen dem Leistungseingang der Gleichrichterschaltung und dem Zwischenkreis angeordnet ist, wahlweise stromaufwärts der Gleichrichterschaltung oder stromabwärts derselben, um im inaktiven Zustand der Bürste den Leistungseingang der Gleichrichterschaltung von dem Zwischenkreis zu trennen.

13. Vorrichtung (1;1') nach einem der Ansprüche 3 bis 12, **dadurch gekennzeichnet, dass** der Um- oder Wechselrichter derart ausgebildet ist, dass er an seinem Ausgang eine zwei- oder dreiphasige Spannung mit einer variablen Frequenz erzeugt.

14. Vorrichtung (1;1') nach Anspruch 13, **gekennzeichnet durch** eine Baugruppe zur Erzeugung eines Frequenzsollwerts gemäß einer kontinuierlichen Hochlauf- und/oder Stillsetzungs-Rampe, so dass der Motor (6,6') sanft anläuft und/oder sanft stillgesetzt wird.

15. Vorrichtung (1;1') nach einem der vorhergehenden Ansprüche, **gekennzeichnet durch** eine Baugruppe zur Erzeugung eines logischen Drehrichtungssignals, dessen logischer Pegel die Drehrichtung des Motors (6;6') definiert, wobei dieses logische Drehrichtungssignal zwischen zwei aufeinander folgenden Einschaltbefehlen des Motors (6;6') umgeschalten wird, so dass der Motor (6;6') immer abwechselnd in einer und in der anderen Drehrichtung anläuft.

16. Vorrichtung (1;1') nach einem der vorhergehenden Ansprüche, **dadurch gekennzeichnet, dass** die Motorsteuereinrichtung (16;16') in einem Gehäuse (15;15') angeordnet ist, das an dem Motoranschlusskasten (14) oder an einem sonstigen Bereich des Motors (6;6') festgelegt ist.

Fig.1

Fig.2

Fig.3

Fig.4

EP 4 162 795 A1

**Europäisches Patentamt**
**European Patent Office**
**Office européen des brevets**

# EUROPÄISCHER RECHERCHENBERICHT

**Nummer der Anmeldung**

**EP 22 02 0483**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2016 102264 U1 (SCHURR GERÄTEBAU GMBH [DE]) 18. Mai 2016 (2016-05-18) | 1-9,13, 14,16 | INV. A01K15/02 A01K13/00 |
| Y | * Anspruch 1; Abbildung 1 * | 10 | |
| | ----- | | |
| X | EP 2 852 279 B1 (DELAVAL HOLDING AB [SE]) 8. Juni 2016 (2016-06-08) * [0026, 0030-0045]; Anspruch 1; Abbildungen 1-4 * | 1-9, 11-16 | |
| | ----- | | |
| X | DE 20 2015 103452 U1 (DELAVAL HOLDING AB [SE]) 14. Juli 2015 (2015-07-14) * [0014, 0025, 0030]; Ansprüche 1, 13; Abbildungen 1-3 * | 1-9,13, 14,16 | |
| | ----- | | |
| Y | EP 2 008 512 A1 (BAS ANTRIEBSTECHNIK GMBH [DE]) 31. Dezember 2008 (2008-12-31) * Absatz [0069]; Anspruch 18 * | 10 | |
| | ----- | | |

**RECHERCHIERTE SACHGEBIETE (IPC)**

**A01K**

Der vorliegende Recherchenbericht wurde für alle Patentansprüche erstellt

| Recherchenort | Abschlußdatum der Recherche | Prüfer |
|---|---|---|
| Den Haag | 9. Februar 2023 | Steinbock, Lorenz |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 02 0483

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2023

| Im Recherchenbericht angeführtes Patentdokument | Datum der Veröffentlichung | Mitglied(er) der Patentfamilie | Datum der Veröffentlichung |
|---|---|---|---|
| DE 202016102264 U1 | 18-05-2016 | KEINE | |
| EP 2852279 B1 | 08-06-2016 | BR 112014029053 A2 | 24-04-2018 |
| | | CA 2871725 A1 | 28-11-2013 |
| | | CL 2014003187 A1 | 20-03-2015 |
| | | CN 104320969 A | 28-01-2015 |
| | | DK 2852279 T3 | 19-09-2016 |
| | | EP 2852279 A1 | 01-04-2015 |
| | | ES 2589735 T3 | 16-11-2016 |
| | | JP 6053228 B2 | 27-12-2016 |
| | | JP 2015520611 A | 23-07-2015 |
| | | KR 20150011358 A | 30-01-2015 |
| | | PL 2852279 T3 | 30-12-2016 |
| | | RU 2014152027 A | 20-07-2016 |
| | | SE 1250525 A1 | 24-11-2013 |
| | | US 2015136039 A1 | 21-05-2015 |
| | | WO 2013176596 A1 | 28-11-2013 |
| DE 202015103452 U1 | 14-07-2015 | KEINE | |
| EP 2008512 A1 | 31-12-2008 | DE 102007029555 A1 | 15-01-2009 |
| | | EP 2008512 A1 | 31-12-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2013176596 A1